(19) Europäisches Patentamt / European Patent Office / Office européen des brevets

(11) **EP 3 270 365 B1**

(12) **FASCICULE DE BREVET EUROPEEN**

(45) Date de publication et mention
de la délivrance du brevet:
**31.05.2023 Bulletin 2023/22**

(21) Numéro de dépôt: **17177501.8**

(22) Date de dépôt: **22.06.2017**

(51) Classification Internationale des Brevets (IPC):
*G08G 5/00* *(2006.01)*      *G08G 5/02* *(2006.01)*
*B64D 47/08* *(2006.01)*      *B64C 27/57* *(2006.01)*
*B64D 45/08* *(2006.01)*

(52) Classification Coopérative des Brevets (CPC):
**B64D 45/08; B64C 27/57; B64D 47/08;
G08G 5/0021; G08G 5/025; G08G 5/045**

(54) **DISPOSITIF D'AIDE AU PILOTAGE D'UN GIRAVION, GIRAVION ASSOCIE ET PROCEDE D'AIDE AU PILOTAGE CORRESPONDANT**

HILFSVORRICHTUNG ZUR STEUERUNG EINES DREHFLÜGELFLUGZEUGS, UND ENTSPRECHENDES HILFSVERFAHREN ZUR STEUERUNG

A DEVICE FOR ASSISTING THE PILOTING OF A ROTORCRAFT, AN ASSOCIATED DISPLAY, AND A CORRESPONDING METHOD OF ASSISTING PILOTING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.07.2016 FR 1601075**

(43) Date de publication de la demande:
**17.01.2018 Bulletin 2018/03**

(73) Titulaire: **Airbus Helicopters
13725 Marignane Cedex (FR)**

(72) Inventeurs:
• **FILIAS, François-Xavier
13330 Pelissanne (FR)**
• **ZOPPITELLI, Pierre
13480 Cabries (FR)**
• **BELANGER, Nicolas
13270 Fos sur Mer (FR)**
• **SALESSE-LAVERGNE, Marc
13190 Allauch (FR)**

(74) Mandataire: **GPI & Associés
EuroParc de Pichaury
Bâtiment B2 - 1er Etage
1330, rue Guillibert de la Lauzière
13856 Aix-en-Provence Cedex 3 (FR)**

(56) Documents cités:
**EP-A2- 2 977 976      US-A1- 2016 055 754
US-B1- 9 257 048**

• **PEINECKE NIKLAS: "Detection of helicopter landing sites in unprepared terrain", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, vol. 9087, 19 juin 2014 (2014-06-19), pages 90870N-90870N, XP060037261, DOI: 10.1117/12.2052674 ISBN: 978-1-62841-730-2**

**Description**

La présente invention se rapporte au domaine des dispositifs d'aide au pilotage, et aux procédés d'aide au pilotage associés, des giravions. De tels dispositifs permettent en effet de faciliter le guidage d'un giravion lors d'une phase d'approche d'une zone de poser pour giravion telle que notamment une hélisurface, un héliport, un hélipont ou en langue anglaise un helipad.

En effet, il peut être parfois complexe pour l'équipage d'un giravion d'identifier la zone de poser sur laquelle le giravion doit atterrir lorsque par exemple cette zone de poser est agencée sur un bâtiment, un véhicule tel un navire, une barge ou une plateforme comprenant plusieurs zones de poser distinctes.

Une telle identification de la zone de poser peut se révéler encore plus complexe lorsque la zone de poser se situe dans un ensemble de plusieurs bâtiments ou plateformes géographiquement proches les uns des autres.

L'équipage d'un giravion doit en pratique prévoir un temps supplémentaire pour faire une reconnaissance d'un site lorsqu'il comporte plusieurs zones de poser. Le giravion doit alors embarquer une quantité de carburant supplémentaire pour pouvoir effectuer cette opération de reconnaissance.

De façon générale tel que décrit dans les documents EP 2 996 009 ou WO2014/169354, il est connu d'équiper des aéronefs autonomes, tels des drones, avec des dispositifs permettant d'identifier une zone de poser lointaine puis de garantir un guidage du drone lors d'une phase d'approche de cette zone de poser préalablement identifiée. Le guidage du drone par rapport à la zone de poser s'effectue au moyen d'une caméra apte à détecter la présence d'une zone de poser et à suivre automatiquement la position de cette zone de poser. Une telle caméra peut ainsi notamment être choisie de type "pan-tilt-zoom" c'est à dire comportant deux degrés de liberté en rotation suivant un angle de site et un angle de gisement par rapport à une direction de déplacement du drone et une capacité d'effectuer un grossissement suivant la direction de la zone de poser.

Cependant, si un tel dispositif permet de guider un drone vers une zone de poser unique agencée dans le champ de la caméra, il n'est pas adapté pour permettre à un équipage de giravion d'identifier une zone de poser particulière parmi un ensemble constitué de plusieurs zones de poser géographiquement proches les unes des autres.

On connaît également, tel que décrit dans le document XP 060037261, un procédé et un système d'aide au pilotage d'un giravion pour permettre d'informer un pilote de giravion lors d'une une phase d'atterrissage sur une zone d'atterrissage.

Dans ce cas, une telle zone d'atterrissage n'est pas préparée initialement pour accueillir un giravion. Une telle d'atterrissage ne peut donc être considérée comme étant une zone de poser pour giravion qui est quant à elle spécifiquement préparée, notamment avec un marquage particulier, pour accueillir un giravion.

Le système décrit dans ce document XP 060037261 permet de présélectionner un type de zone d'atterrissage non préparé en fonction par exemple de sa taille, de son orientation et de la géométrie du site.

Des zones d'atterrissage possibles sont alors affichées sur un écran de contrôle en superposition d'une image radar du sol en vue de dessus. Un tel système permet alors au pilote du giravion de choisir l'une de ces zones d'atterrissage parmi celles proposées située en dessous du giravion et de manoeuvrer manuellement le giravion pour effectuer une phase d'atterrissage.

Cependant dans ce cas, le système ne décrit pas une caméra orientée selon une ligne de visée. Il ne permet pas non plus de réaliser l'affichage indépendant des images de chacune des zones d'atterrissage.

Ainsi, ce document XP 060037261 ne divulgue pas non plus des moyens de traitement pour identifier dans au moins une image, parmi ladite pluralité d'images, au moins une zone d'atterrissage possible correspondant à un type de zone d'atterrissage présélectionné.

Au surplus, le pilote ne peut actionner des moyens de sélection d'une zone d'atterrissage souhaitée et le système ne comporte aucune unité de commande pour générer une consigne de commande permettant de piloter automatiquement le giravion en direction de la zone d'atterrissage souhaitée.

On connaît également, tel que décrit dans le document EP 2 977 976 A2, un procédé et un système d'aide au pilotage d'un giravion pour permettre de piloter un giravion lors d'une phase d'atterrissage sur une zone d'atterrissage.

Cependant, le document EP 2 977 976 A2 ne décrit pas une caméra orientée selon une ligne de visée de manière à réaliser l'affichage d'images représentatives des zones de poser recherchées. Une caméra peut être utilisée mais celle-ci est telle un radar permettant uniquement de réaliser une vue de dessus du sol.

Enfin on connaît également d'autres systèmes et procédés d'aide au pilotage pour faciliter l'atterrissage en urgence d'aéronef sur des zones d'atterrissage tels que décrits dans les documents US 9 257 048 B1 et US 2016/055 754 A1.

Comme précédemment, aucun de ces documents ne décrit une caméra permettant d'effectuer des images selon une ligne de visée et de sélectionner ensuite une zone d'atterrissage parmi les différentes images issues de la caméra.

Ces différents systèmes et procédés sont donc plus adaptés pour faciliter le pilotage d'un giravion lors d'une phase d'atterrissage et non lors d'une phase d'approche précédent cette phase.

La présente invention a alors pour objet de proposer un dispositif permettant de s'affranchir des limitations mentionnées ci-dessus. En outre, le dispositif et le procédé d'aide au pilotage selon l'invention permettent d'identifier plusieurs zones de poser du même type selon une ligne de visée orientée vers l'horizon et, lors d'une phase d'approche, de guider un giravion suivant une direction sensiblement horizontale vers l'une de ces zones de poser une fois sélectionnée par l'équipage du giravion.

Ainsi, l'invention se rapporte à un dispositif d'aide au pilotage d'un giravion pour permettre de piloter un giravion lors d'une phase d'approche précédant une phase d'atterrissage sur une zone de poser pour giravion. Tel qu'indiqué précédemment, une telle zone de poser peut notamment se présenter sous la forme d'une hélisurface, d'un héliport, d'un hélipont ou en langue anglaise d'un helipad.

Un tel dispositif est remarquable en ce qu'il comporte :

- des moyens de présélection pour présélectionner un type de zone de poser à rechercher par le dispositif, ces moyens de présélection étant actionnés par un équipage du giravion,
- au moins une caméra pour effectuer une pluralité d'images de l'environnement du giravion suivant une ligne de visée orientée au moins suivant une direction postéro-antérieure du giravion,
- des moyens de traitement pour identifier dans au moins une image, parmi la pluralité d'images, au moins une zone de poser recherchée correspondant au type de zone de poser présélectionné via les moyens de présélection,
- un organe d'affichage pour au moins afficher une image représentative de la (ou les) zone(s) de poser recherchée(s),
- des moyens de sélection par l'équipage du giravion pour sélectionner une zone de poser souhaitée parmi la (ou les) zone(s) de poser recherchée(s),
- une unité de commande pour générer une consigne de commande permettant de piloter automatiquement le giravion sensiblement horizontalement en direction de la zone de poser souhaitée.

Autrement dit, le dispositif d'aide au pilotage permet à un équipage de visualiser sur l'organe d'affichage plusieurs zones de poser correspondant au type de zone de poser recherché et présélectionné via les moyens de présélection. De telles zones de poser sont par ailleurs distantes du giravion et éloignées du giravion suivant au moins une direction horizontale. De telles zones de poser ne constituent donc pas des zones d'atterrissage d'urgence situées verticalement en dessous du giravion. La consigne de commande permet alors de piloter le giravion sur plusieurs centaines de mètres, voire plusieurs kilomètres, en suivant une trajectoire sensiblement horizontale.

De tels moyens de présélection peuvent notamment être formés par un écran tactile de présélection sur lequel des images symboliques ou des photos de zones de poser sont affichées. Le pilote ou le copilote du giravion peut alors choisir un type de zone de poser à rechercher par la suite par le dispositif et à afficher sur l'organe d'affichage.

Par ailleurs, les moyens de traitement permettant d'identifier la (ou les) zone(s) de poser recherchée(s) peuvent être formés par des calculateurs, processeurs ou plus généralement un ordinateur présentant la capacité de calcul nécessaire pour pouvoir identifier la (ou les) zone(s) de poser recherchée(s) dans une pluralité d'images. Une telle identification d'une zone de poser recherchée s'effectue en plusieurs étapes. Dans un premier temps, on peut procéder à une détection d'une ligne d'horizon à l'aide d'une méthode dite « par gradient ». Plus précisément, une telle méthode consiste à utiliser un « filtre de Sobel » vertical sur une image. Une telle méthode permet ainsi d'amplifier les contrastes et de détecter les lignes horizontales. Ensuite, il suffit de trouver la droite qui passe par le plus de points à l'aide d'une « transformée de Hough ». En pratique, la ligne d'horizon n'est pas tout à fait une droite mais un arc de parabole sur l'image.

Une détection approximative de la ligne d'horizon n'est cependant pas gênante puisque la détection de l'horizon ne sert qu'à éliminer la partie haute de l'image correspondant au ciel et n'est pas utile pour détecter les zones de poser.

Par ailleurs, la prise en compte par les moyens de traitement de l'inclinaison du giravion suivant un axe de roulis est obtenue grâce à des instruments de bords annexes permettant de connaître l'assiette du giravion à tout moment et, par conséquent, de retrouver l'angle de rotation permettant de remettre l'image droite correspondant à une assiette horizontale du giravion.

Une fois la ligne d'horizon identifiée et le ciel éliminé, les moyens de traitement mettent en oeuvre une méthode dite « par région » telle décrite pour une autre application dans une publication d'Arnaud Le Troter, Sébastien Mavromatis et Jean Sequeira et désignée par « Soccer field détection in video images using color and spatial cohérence - International Conférence on Image Analysis and Récognition Porto, Portugal, Octobre 2004 ».

Une telle méthode par région permet alors de rechercher les couleurs dominantes d'une image ou d'une zone d'intérêt par distribution colorimétrique. Elle permet également la recherche des zones cohérentes selon un critère colorimétrique de l'image puis elle utilise un modèle d'élargissement sur les pixels de l'image. Un tel modèle est connu pour établir une reconnaissance des pixels colorés constituants des images et peut utiliser un espace de représentation des couleurs tel que celui désigné en langue française par l'acronyme « TSL » pour Teinte, Saturation, Luminosité et en langue anglaise par l'acronyme « HLS » pour Hue, Saturation Lightness.

Une telle méthode par région peut notamment permettre de détecter la mer dans une partie basse de l'image agencée en dessous de la ligne d'horizon et le ciel dans la partie haute de l'image agencée au dessus de la ligne d'horizon.

Par la suite, le regroupement des pixels restants en zones connexes permet d'obtenir les zones comprenant une ou plusieurs zones de poser recherchées. Les zones connexes présentes uniquement dans le ciel sont retirées et correspondent généralement à des nuages, des fumées et des objets volants qui ne correspondent pas à des zones de poser à rechercher.

La formation des zones cohérentes consiste à assigner à chaque pixel une zone dite « zone TSL » ou une absence de zone TSL si la couleur du pixel n'est dans aucune des zones dominantes TSL (ou couleurs dominantes de l'image). Ensuite, les moyens de traitement permettent de créer des zones connexes de pixels appartenant à une même zone TSL.

Le phénomène d'élargissement d'un pixel à une zone est réalisé en appliquant un outil de morphologie mathématique correspondant à une fermeture. L'élément structurant choisi pour la fermeture est un cercle de taille très inférieure aux tailles minimales des zones de poser ou ensembles de zones de poser que l'on souhaite détecter dans l'image. La taille choisie de l'élément structurant est de l'ordre du dixième de celle des objets à détecter.

Les zones obtenues sont alors identifiées comme des zones de poser potentielles et peuvent être affichées indépendamment par les moyens d'affichage puis sélectionnées par l'équipage.

Ainsi, une fois la zone de poser souhaitée sélectionnée par l'équipage l'unité de commande permet alors de piloter le giravion automatiquement en direction de cette zone de poser souhaitée sans autre action du pilote du giravion suivant une direction postéro-antérieure du giravion qui comporte au moins une composante horizontale.

Avantageusement, l'organe d'affichage peut permettre d'afficher différentes images représentatives respectivement d'une pluralité de types de zones de poser à rechercher par le dispositif et les moyens de présélection peuvent être de type tactiles et agencés directement sur une surface d'affichage de l'organe d'affichage.

Ainsi, l'organe d'affichage permettant d'afficher une image représentative de la (ou les) zone(s) de poser recherchée(s) et les moyens de sélection de la zone de poser souhaitée parmi la (ou les) zone(s) de poser recherchée(s) peuvent être confondus et être formés par un écran tactile de sélection.

Au surplus, l'écran tactile de présélection et l'écran tactile de sélection peuvent également être confondus et être formés par un unique écran tactile permettant dans un premier temps de présélectionner un type de zone de poser à rechercher, dans un deuxième temps d'afficher au moins une zone de poser identifiée correspondant au type de zone de poser présélectionné et enfin dans un troisième temps de sélectionner une zone de poser souhaitée.

En pratique, les moyens de traitement peuvent permettre d'identifier dans au moins une image, parmi la pluralité d'images, au moins un ensemble comportant plusieurs zones de poser recherchées correspondant au type de zone de poser présélectionné via les moyens de présélection. Dés lors, l'organe d'affichage peut quant à lui permettre d'afficher une image représentative du (ou des) ensemble(s) comportant plusieurs zones de poser recherchées. Les moyens de sélection peuvent quant à eux permettre de sélectionner un ensemble souhaité parmi le (ou les) ensemble(s) comportant plusieurs zones de poser recherchées.

En d'autres termes, les moyens de traitement permettent d'identifier dans les images des zones connexes comportant plusieurs zones de poser telles des bateaux ou des plateformes pétrolières. Une telle identification est particulièrement utile dans le cas où le giravion évolue en direction d'un site comportant plusieurs ensembles de zones de poser comme dans un champ de plateformes pétrolières très semblables.

Selon un exemple de réalisation de l'invention, le dispositif peut comporter des moyens de calcul pour déterminer, à partir d'une image de la zone de poser souhaitée, la distance entre le giravion et un centre géométrique de la zone de poser souhaitée.

Dans le cas d'une zone de poser représentée au sol par un cercle, l'épaisseur du trait formant la circonférence de ce cercle peut être normée et valoir 1 mètre selon la législation « CAP 437 - Standards for Offshore Helicopter Landing Areas ». Pour les autres zones de poser, il est possible de définir d'autres catégories de zones de poser en fonction de l'épaisseur du cercle, du carré, du triangle matérialisant une zone de poser au sol ou sur un support. Suivant le type de zone de poser présélectionné un algorithme différent peut être utilisé par les moyens de calcul.

En outre, dans le cas d'une zone de poser matérialisée par un cercle prédéterminé, en utilisant l'angle $\varepsilon$ sous lequel la (ou les) caméra(s) voi(en)t l'épaisseur du cercle, la distance $d$ au centre de la zone de poser peut être calculée. La forme de la zone de poser vue par la caméra est une ellipse correspondant à la forme déformée du cercle vue par la (ou les) caméra(s) et identifiée dans les images dont les équations peuvent être calculées.

En faisant l'approximation des petits angles, on obtient:

$$d = \frac{e}{\varepsilon}$$

avec e l'épaisseur du contour de la zone de poser égale à un mètre. La valeur $\varepsilon$ est quant à elle calculable à partir de la géométrie projective en utilisant notamment une approximation du modèle de caméra sténopé. Le modèle sténopé consiste à supposer que tous les rayons de lumière passent par un point unique (appelé sténopé) et sont projetés sur le plan sur lequel est capturée l'image. La distance entre le point et le plan est appelée distance focale f.

Conformément au modèle sténopé, on définit le point de concours des rayons comme origine du repère orthonormé de l'espace trois dimensions avec l'axe z, l'axe orthogonal au plan de l'image dans la direction opposée à l'image.

Le point de coordonnées (x,y,z) est projeté sur le plan image (*x',y',z'*) avec : $x' = x * \frac{f}{z}$ , $y' = y * \frac{f}{z}$ et *z' = f.*

L'angle sous lequel on voit un objet correspond alors à la taille de l'objet sur le plan image divisée par la distance focale. Cette approximation n'est valable que pour les angles de petites tailles. En effet, le modèle sténopé n'est plus un modèle pertinent pour des angles élevés. En pratique, la taille de l'image est définie par un nombre de pixels : il faut donc la multiplier par un coefficient de proportionnalité convertissant angle et pixel. Le dispositif reproduit alors une scène, dont on connaît les caractéristiques. Ainsi grâce à la caméra, cette scène est capturée, les images obtenues permettent de calculer les coefficients de proportionnalité.

Ensuite, les données du giravion telles que son assiette ainsi que la position de la caméra permettent d'identifier le site du giravion défini par un angle $\partial$ entre l'horizon, le giravion et la zone de poser.

Les moyens de calculs commencent par réaliser une rotation d'angle inverse à l'angle de roulis du giravion sur l'image prise par la caméra pour la remettre droite.

Par suite, l'angle $\partial$ est calculé en effectuant dans un premier temps la somme entre l'angle de tangage du giravion fourni par les instruments de bord et l'angle séparant un axe de visée de la caméra et un axe longitudinal du giravion (valeur constante si la caméra est fixée à l'appareil sinon, lorsqu'elle est variable, elle peut être transmise aux moyens de calcul par le système de caméra). L'angle $\partial$ est alors calculé en ajoutant cette somme à un angle mesuré sur l'image. Cet angle mesuré à partir de l'image correspond à l'angle séparant l'axe de visée de la caméra de celui passant par la caméra et le centre de la zone de poser. Cet angle mesuré sur l'image est donc obtenu à partir des données fournies par la caméra permettant de définir un angle à partir de pixels et de la distance en pixels entre le centre de la zone de poser et l'axe de visée de la caméra.

Ainsi, la distance horizontale est donnée par la formule :

$$D_h = d * cos(\partial)$$

La distance verticale ou différence d'altitude est quant à elle donnée par la formule :

$$D_v = d * sin(\partial)$$

Par ailleurs, les zones de poser répondant à la norme CAP437 ont une forme circulaire avec un H au centre. Lorsque les giravions sont éloignés de l'axe vertical passant par le centre de ces zones de poser, les zones de poser sont alors vues sous la forme d'ellipses qui peuvent être caractérisée par une équation réduite dans un repère orthonormé sous la forme :

$$\frac{((x \cos \theta + y \sin \theta) - x_E)^2}{a^2} + \frac{((-x \sin \theta + y \cos \theta) - y_E)^2}{b^2} = 1$$

avec E($x_E$,$y_E$) le centre de l'ellipse, $\theta$ l'orientation de l'ellipse, a le demi axe focal et b le demi axe non focal. Ainsi, pour caractériser une ellipse quelle qu'elle soit, les moyens de calcul permettent de déterminer ces cinq paramètres.

Le document US 4618989 donne un exemple de réalisation d'un extracteur de paramètres d'ellipse dans une image.

Avantageusement, les moyens de calcul peuvent déterminer au moins une trajectoire d'approche du giravion pour s'approcher de la zone de poser souhaitée. L'organe d'affichage peut alors afficher une image représentative de la (ou des) trajectoire(s) d'approche du giravion. Les moyens de sélection peuvent ainsi permettre de sélectionner une trajectoire d'approche souhaitée parmi la (ou les) trajectoire(s) d'approche du giravion. Enfin, l'unité de commande peut générer une consigne de commande permettant de piloter automatiquement le giravion sensiblement horizontalement en direction de la zone de poser souhaitée en suivant la trajectoire d'approche souhaitée.

Les moyens de calcul déterminent une trajectoire d'approche à partir de données connues ou calculées telles que la distance séparant le giravion du centre de l'ellipse, des paramètres d'état du giravion suivant les trois axes tels que les composantes Vx, Vy, Vz d'un vecteur vitesse de déplacement du giravion, un angle de roulis, un angle de tangage et un angle de lacet ainsi que le déplacement éventuel de la caméra par rapport à une position de référence.

L'équipage du giravion peut alors confirmer ou infirmer la proposition d'approche affichée sur l'organe d'affichage. Dans le cas où le dispositif indique une zone de poser non conforme, l'équipage peut alors forcer le dispositif à le guider vers la zone de poser sur laquelle il souhaite atterrir. Ainsi, l'équipage garde un pouvoir décisionnel sur le dispositif d'aide au pilotage à tout instant. Un événement où l'équipage serait en désaccord avec le dispositif peut survenir dans de rares cas tel qu'un atterrissage forcé sur une zone de poser fermée, une zone de poser ne suivant aucune des normes définies dans le dispositif ou encore une (ou des) caméra(s) défaillante(s).

En pratique, les moyens de traitement peuvent permettre d'identifier dans au moins une image, parmi la pluralité d'images, si la (ou les) zone(s) de poser souhaitée(s) comporte(nt) un élément d'occlusion puis d'afficher un message d'information sur l'organe d'affichage avec l'image représentative de la (ou des) zone(s) de poser souhaitée(s) comportant l'élément d'occlusion.

Une méthode de filtrage par gradient est employée à l'intérieur de la zone de poser pour y faire apparaître le H. Puis, une transformée de Hough peut être appliquée pour détecter les segments de droite du H. On cherche ensuite les coins correspondant aux extrémités communes à deux segments pour trouver les douze coins appartenant à un ensemble de douze segments.

Si la distance à la zone de poser est inférieure à une certaine valeur prédéterminée et que la forme du H n'a toujours pas été détectée, le dispositif peut alerter l'équipage du giravion. Une absence de détection de la forme de H peut subvenir dans plusieurs cas tels qu'une zone de poser déjà occupée par un giravion ou plus généralement qu'une zone de poser fermée interdisant tout atterrissage à sa surface. Dans les deux cas une alerte est remontée à l'équipage du giravion pour préconiser une procédure de désengagement du pilote automatique contrôlant les commandes d'au moins un rotor du giravion.

En outre, il peut arriver qu'un giravion posé sur une zone de poser n'empêche pas la détection de la forme de H. En effet, suivant les tailles respectives du giravion et de la zone de poser ainsi que l'angle de la prise de vu, la forme du H peut être visible dans son intégralité. Cependant, dans ce cas particulier, le giravion au sol peut masquer une partie du contour de la zone de poser ce qui peut être aussi détecté.

Selon un exemple de réalisation, les moyens de traitement peuvent permettre d'identifier dans au moins une image, parmi la pluralité d'images, si un environnement immédiat de la (ou des) zone(s) de poser souhaitée(s) comporte(nt) une zone interdite.

De telles zones interdites sont des zones de taille réduite où des éléments fixes ayant une hauteur supérieure aux valeurs de sécurité peuvent être présents à proximité immédiate de la zone de poser. Une telle zone interdite est alors marquée en tant que telle à la périphérie de la zone de poser avec un symbole particulier et/ou une couleur particulière. Il est alors interdit pour tout giravion de s'approcher de la zone de poser en suivant une trajectoire d'approche coupant ou passant par cette zone interdite.

Une telle détection des zones interdites peut s'effectuer en plusieurs étapes, la première consistant en la détection des éléments intéressants via une analyse colorimétrique. En effet, les tracés des zones interdites sont généralement représentés par des bandes parallèles rouges et blanches identifiables par analyse colorimétrique. Ensuite, on vérifie que les éléments de ces couleurs sont bien les marquages en question et enfin on en déduit les contours de la zone dans l'espace trois dimensions.

L'étape de détection des couleurs se rapproche de la méthode explicitée ci-dessus. La recherche des tracés rectilignes de couleurs adéquates se fait à partir d'une transformée de Hough pour la détection de segments de droites.

Enfin la détection des zones dans l'espace trois dimensions se fait en projetant orthogonalement l'image de la zone de poser et des marquages, sur le plan contenant la zone de poser dans l'espace trois dimensions.

Dans ce cas, la (ou les) trajectoire(s) d'approche du giravion peuvent permettre d'éviter une zone interdite présente dans l'environnement immédiat de la (ou des) zone(s) de poser souhaitée(s).

A partir des résultats obtenus sur la localisation de la zone de poser et sur les zones interdites à proximité, une trajectoire d'approche est alors proposée et affichée sur l'organe d'affichage. Le statut de la zone de poser peut également être affiché en surimpression pour indiquer au pilote si un giravion est déjà présent sur la zone de poser ou si la zone de poser est fermée.

Avantageusement, la (ou les) caméra(s) peut (peuvent) comporter une première caméra agencée sur une tourelle mobile pour régler l'orientation d'une première ligne de visée de la première caméra suivant un angle de site et/ou un angle de gisement, la première caméra possédant un premier champ et permettant d'obtenir une image panoramique de la (ou des) zone(s) de poser recherchée(s). Par exemple, le premier champ de cette première caméra peut être un champ moyen de 30°x20°.

En pratique, la (ou les) caméra(s) peut (peuvent) comporter une seconde caméra agencée sur la tourelle mobile pour régler l'orientation d'une seconde ligne de visée de la seconde caméra suivant un angle de site et/ou un angle de gisement, la seconde caméra possédant un second champ inférieur au premier champ de la première caméra et permettant d'obtenir une image "haute résolution" de la zone de poser recherchée. Par exemple, le second champ de cette seconde caméra peut être un petit champ de 5°x3.5° Par "haute résolution", on désigne une résolution de l'image obtenue par la seconde caméra supérieure à 250 ppp (pixel par pouce).

Une troisième caméra fixe de grand angle 110°x110° orientée vers le bas peut quant à elle permettre d'obtenir une image de la zone de poser juste avant la phase de poser.

Selon un exemple de réalisation de l'invention, le dispositif peut comporter au moins une mémoire pour stocker des informations relatives à la (ou les) zone(s) de poser recherchée(s), l'organe d'affichage permettant d'afficher les informations simultanément avec et/ou en remplacement de l'image correspondante représentative de la (ou les) zone(s) de poser recherchée(s).

Les informations stockées dans cette mémoire peuvent par exemple être des images ou des photos à afficher sur l'organe d'affichage. De telles photos d'une zone de poser peuvent notamment être de résolution supérieure à la résolution des images prises par la (ou les) caméra(s) du dispositif ou encore avoir été prises avec un angle particulier ou dans des conditions climatiques favorables.

Comme déjà évoqué, l'invention se rapporte également à un giravion remarquable en ce qu'il comporte un dispositif d'aide au pilotage tel décrit précédemment pour permettre de piloter ce giravion lors d'une phase d'approche précédant une phase d'atterrissage sur une zone de poser pour giravion.

Un tel giravion équipé du dispositif d'aide au pilotage décrit ci-dessus est donc plus efficace et moins énergivore en carburant pour rallier une zone de poser localisée à proximité immédiate d'autres zones de poser du même type.

Comme déjà évoqué, un giravion conforme à l'invention est également plus sûr car il permet à un équipage d'éviter des zones de poser non disponibles ou même fermées. Enfin, il permet également de proposer à l'équipage du giravion de sélectionner une trajectoire d'approche en prenant compte d'éventuelles zones interdites.

La présente invention a aussi pour objet le procédé d'aide au pilotage d'un giravion mis en oeuvre lors d'une phase d'approche précédant une phase d'atterrissage sur une zone de poser pour giravion.

En outre, un tel procédé est remarquable en ce qu'il comporte :

- une étape de présélection pour présélectionner un type de zone de poser à rechercher par le procédé, cette étape de présélection étant effectuée par un équipage du giravion en actionnant des moyens de présélection,
- une étape d'acquisition pour effectuer une pluralité d'images de l'environnement du giravion au moins suivant une direction postéro-antérieure du giravion,
- une étape de traitement pour identifier dans au moins une image, parmi la pluralité d'images, au moins une zone de poser recherchée correspondant au type de zone de poser présélectionné lors de l'étape de présélection,
- au moins une étape d'affichage pour au moins afficher une image représentative de la (ou des) zone(s) de poser recherchée(s),
- au moins une étape de sélection par l'équipage du giravion pour au moins sélectionner une zone de poser souhaitée parmi la (ou les) zone(s) de poser recherchée(s),
- au moins une étape de commande pour au moins générer une consigne de commande permettant de piloter automatiquement le giravion sensiblement horizontalement en direction de la zone de poser souhaitée.

Autrement dit, un tel procédé est particulièrement adapté pour gagner du temps lors de la recherche d'une zone de poser lorsque celle-ci est localisée à côté d'autres zones de poser du même type c'est-à-dire par exemple avec la même forme ou les mêmes symboles. Ce procédé permet en outre d'alléger la charge de travail incombant à l'équipage du giravion lorsque le giravion se trouve à proximité de la zone de poser souhaitée.

Avantageusement, l'étape de traitement peut permettre d'identifier dans au moins une image, parmi la pluralité d'images, au moins un ensemble comportant plusieurs zones de poser recherchées correspondant au type de zone de poser présélectionné lors de l'étape de présélection. Dans ce cas, l'étape d'affichage peut alors permettre d'afficher une image représentative du (ou des) ensemble(s) comportant plusieurs zones de poser recherchées. Enfin, l'étape de sélection peut quant à elle également permettre de sélectionner un ensemble souhaité parmi le (ou les) ensemble(s) comportant plusieurs zones de poser recherchées et l'étape de commande peut alors générer une consigne de commande permettant de piloter automatiquement le giravion sensiblement horizontalement en direction de l'ensemble souhaité.

En pratique, le procédé peut comporter une étape de calcul pour déterminer, à partir d'une image de la zone de poser souhaitée, la distance entre le giravion et un centre géométrique de la zone de poser souhaitée.

Selon un exemple de réalisation de l'invention, l'étape de calcul peut déterminer au moins une trajectoire d'approche du giravion pour s'approcher de la zone de poser souhaitée. L'étape d'affichage peut alors afficher une image représentative de la (ou des) trajectoire(s) d'approche du giravion. Dans ce cas, l'étape de sélection peut permettre de sélectionner une trajectoire d'approche souhaitée parmi la (ou les) trajectoire(s) d'approche du giravion. Par suite, l'étape de commande peut ainsi générer une consigne de commande permettant de piloter automatiquement le giravion sensiblement horizontalement en direction de la zone de poser souhaitée en suivant la trajectoire d'approche souhaitée.

Avantageusement, l'étape de traitement peut permettre d'identifier dans au moins une image, parmi la pluralité d'images, si la (ou les) zone(s) de poser souhaitée(s) comporte(nt) un élément d'occlusion puis d'afficher un message d'information lors de l'étape d'affichage avec l'image représentative de la (ou des) zone(s) de poser souhaitée(s) comportant l'élément d'occlusion.

En pratique, l'étape de traitement peut permettre d'identifier dans au moins une image, parmi la pluralité d'images, si un environnement immédiat de la (ou des) zone(s) de poser souhaitée(s) comporte une zone interdite.

Selon un exemple de réalisation de l'invention, la (ou les) trajectoire(s) d'approche du giravion peut(peuvent) permettre d'éviter une zone interdite présente dans l'environnement immédiat de la (ou des) zone(s) de poser souhaitée(s).

Avantageusement, le procédé peut comporter au moins une étape de stockage pour stocker des informations relatives à la (ou aux) zone(s) de poser recherchée(s), l'étape d'affichage permettant d'afficher les informations simultanément avec et/ou en remplacement de l'image correspondante représentative de la (ou des) zone(s) de poser recherchée(s).

L'invention et ses avantages apparaîtront avec plus de détails dans le cadre de la description qui suit avec des exemples donnés à titre illustratif en référence aux figures annexées qui représentent :

- la figure 1, une vue schématique de côté d'un giravion conforme à l'invention,

- la figure 2, une vue schématique de côté d'un giravion en phase d'approche d'une zone de poser,

- la figure 3, un schéma de principe illustrant un dispositif d'aide au pilotage d'un giravion, conformément à l'invention,

- les figures 4 à 7, différentes images ou groupes d'images affichées par l'organe d'affichage, conformément à l'invention, et

- les figures 8 à 11, des schémas illustrant différentes variantes du procédé d'aide au pilotage d'un giravion, conformément à l'invention.

Les éléments présents dans plusieurs figures distinctes sont affectés d'une seule et même référence.

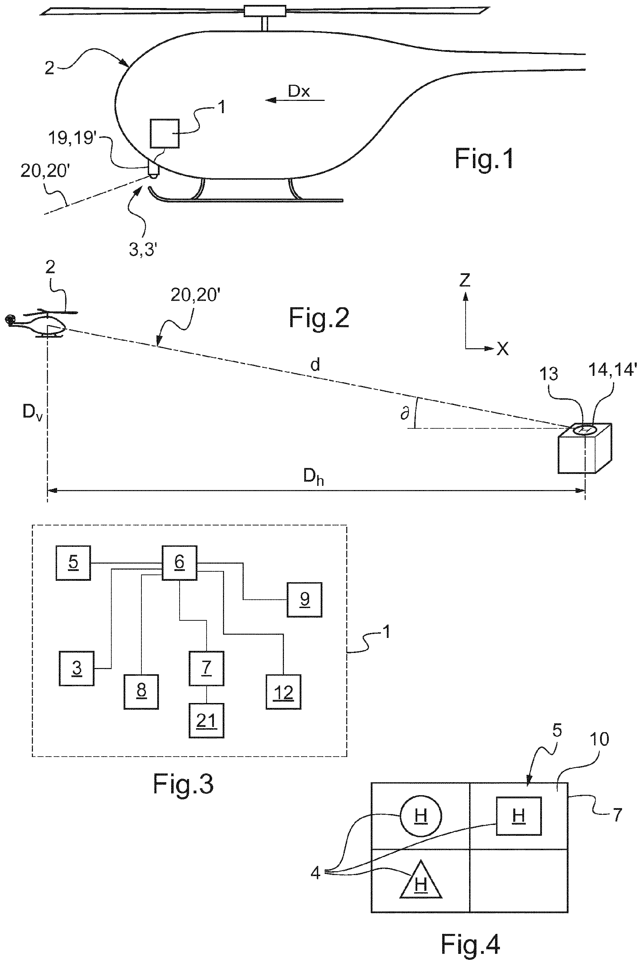

Comme déjà évoqué et telle que représentée à la figure 1, l'invention se rapporte à un dispositif d'aide au pilotage 1 d'un giravion 2 et au giravion 2 équipé d'un tel dispositif d'aide au pilotage 1. Ce dispositif 1 est plus particulièrement utilisé par l'équipage du giravion 2 lors d'une phase d'approche d'une zone de poser pour giravion 2 précédant une phase d'atterrissage sur cette zone de poser.

Un tel dispositif 1 comporte en outre au moins une caméra 3, 3' pour au moins effectuer une pluralité d'images d'un environnement du giravion 2 suivant une ligne de visée 20, 20'. Grâce à une tourelle mobile 19, 19', la (ou les) caméra(s) 3, 3' peut (peuvent) alors suivre une zone de poser sur laquelle l'équipage souhaite poser le giravion 2.

Telle que représentée, la ligne de visée 20, 20' de la (ou les) caméra(s) 3, 3' est orientée au moins suivant une direction postéro-antérieure Dx du giravion 2 et permet à la (ou aux) caméra(s) 3, 3' de réaliser la pluralité d'images d'un environnement du giravion 2 situé en amont du giravion 2 suivant cette direction postéro-antérieure Dx. Ainsi la pluralité d'images peut comporter une ligne d'horizon et ne fournit pas uniquement des images en vue de dessus de l'environnement situé en dessous du giravion 2.

Tel que représenté à la figure 2, le positionnement d'un giravion 2 par rapport à une zone de poser souhaitée 14 peut être défini par une distance d séparant le giravion 2 d'un centre géométrique 13 de la zone de poser 14 ou encore par une distance verticale Dv et une distance horizontale Dh correspondant aux projection de la distance d dans un repère XZ dans lequel X est un axe horizontal et Z un axe vertical.

Un tel dispositif 1 peut ainsi permettre, à partir d'un traitement des images issues de la (ou des) caméra(s) orientée(s) suivant la ligne de visée 20, 20', de calculer les distances Dv et Dh séparant le giravion 2 de la zone de poser souhaitée 14.

Par ailleurs tel que représenté à la figure 3, un dispositif d'aide au pilotage 1 comporte également des moyens de présélection 5 permettant à l'équipage de présélectionner un type de zone de poser 4 à rechercher ultérieurement par le dispositif 1. Comme déjà évoqué ces moyens de présélection peuvent être formés notamment par un écran tactile permettant à la fois l'affichage des différents types de zones de poser 4 et leur présélection.

En outre, un tel dispositif 1 comporte des moyens de traitement 6 pour effectuer le traitement des images issues de la (ou des) caméras 3, 3'. De tels moyens de traitement 6 permettent alors d'identifier parmi les images fournies par la (ou les) caméra(s) au moins une zone de poser recherchée 14, 14' correspondant au type de zone de poser présélectionné 4.

Un organe d'affichage 7 permet alors d'afficher une sélection de différentes zones de poser recherchées 14, 14' identifiées par les moyens de traitement 6. Des moyens de sélection 8 permettent alors à l'équipage de sélectionner une zone de poser souhaitée 14 parmi la pluralité de zones de poser recherchées 14, 14' affichées sur l'organe d'affiche 7.

Avantageusement, un tel organe d'affichage 7 et les moyens de sélection 8 peuvent par exemple se présenter sous la forme d'un écran tactile voire même être confondus avec l'écran tactile précédemment évoqué formant les moyens de présélection 5.

Par suite, le dispositif 1 comporte également une unité de commande 9 permettant de générer une consigne de commande pour piloter automatiquement sensiblement horizontalement le giravion 2 en direction de la zone de poser souhaitée 14.

Au surplus, le dispositif 1 peut également comporter des moyens de calcul 12 pour déterminer, à partir des images prises par la (ou les) caméra(s), la distance d séparant le giravion 2 du centre géométrique 13 de la zone de poser souhaitée 14. Une telle information de distance peut ainsi être affichée par l'organe d'affichage 7 en superposition de l'image représentative de la zone de poser recherchée 14, 14'.

De plus, un tel dispositif 1 peut également comporter une mémoire 21 pour stocker des informations relatives à la zone de poser recherchée 14, 14'. Dans ce cas, l'organe d'affichage 7 peut alors afficher ces informations simultanément avec l'image représentative de la zone de poser recherchée 14, 14'. L'organe d'affichage 7 peut également permettre de remplacer l'image représentative de la zone de poser recherchée 14, 14' issue de la (ou les) caméra(s) par une autre image stockée dans la mémoire 21 de cette zone de poser recherchée 14, 14'.

Tel que représenté à la figure 4 et comme déjà évoqué ci-dessus, les moyens de présélection 5 et l'organe d'affichage 7 peuvent être formés par un unique écran tactile. Dans ce cas, les moyens de présélection 5 sont alors formés par une dalle tactile agencée au niveau d'une surface d'affichage 10 de l'organe d'affichage 7.

Les différents types de zones de poser 4 peuvent alors être par exemple représentés sous la forme d'un cercle, un quadrilatère ou d'un triangle.

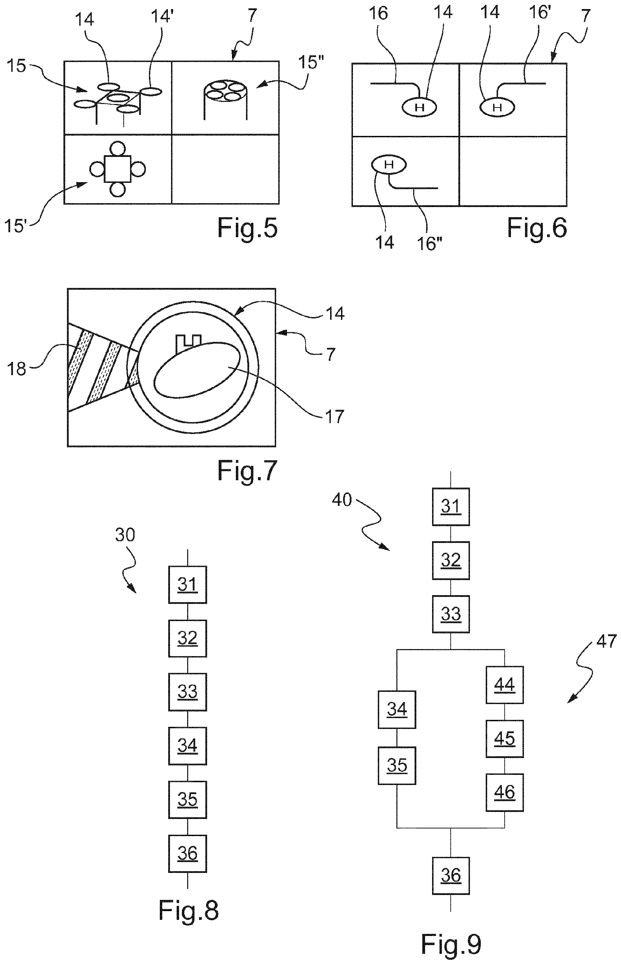

Tel que représenté à la figure 5, les moyens de traitement 6 peuvent également permettre d'identifier plusieurs ensemble 15, 15', 15" comportant plusieurs zones de poser recherchées 14, 14'. Dans ce cas, l'organe d'affichage 7 peut également permettre un affichage de plusieurs images correspondant à ces différents ensembles 15, 15', 15".

L'organe de sélection 8 permet ensuite à l'équipage de sélectionner l'un de ces ensembles 15 pour ensuite permettre à l'unité de commande 9 de générer une consigne de commande permettant de piloter automatiquement le giravion 2 sensiblement horizontalement en direction de l'ensemble sélectionné 15 comportant plusieurs zones de poser recherchées 14, 14'.

Par ailleurs, les moyens de calcul 12 peuvent également permettre de déterminer au moins une trajectoire d'approche 16, 16', 16" permettant pour le giravion 2 de s'approcher de la zone de poser souhaitée 14. Dans ce cas et tel que représenté à la figure 6, l'organe d'affichage 7 peut alors également permettre l'affichage de ces trajectoires d'approche 16, 16', 16".

L'organe de sélection 8 permet ensuite à l'équipage de sélectionner l'une des trajectoires d'approche souhaitée 16 pour ensuite permettre à l'unité de commande 9 de générer une consigne de commande permettant de piloter automatiquement le giravion 2 sensiblement horizontalement en direction de la zone de poser souhaitée 14 avec la trajectoire d'approche souhaitée 16.

Tel que représenté à la figure 7, l'organe de traitement 6 peut également permettre l'identification d'un élément d'occlusion 17 présent dans une zone de poser souhaitée 14. Un tel élément d'occlusion 17 peut par exemple être un autre giravion déjà présent sur la zone de poser souhaité 14.

En outre, une telle détection d'un élément d'occlusion 17 peut être effectuée par un traitement des images issues de la caméra 3 à plusieurs centaines de mètres de la zone de poser souhaitée 14. Par conséquent un tel dispositif 1 permet à un équipage d'anticiper un changement de zone de poser souhaitée 14' bien en amont d'une détection visuelle directe par l'équipage du giravion 2.

De même, l'organe de traitement 6 peut également permettre l'identification d'une zone interdite 18 présente dans l'environnement dans une zone de poser souhaitée 14.

Ainsi, une telle détection d'une zone interdite 18 peut être effectuée par un traitement des images issues de la caméra 3 à plusieurs centaines de mètres de la zone de poser souhaitée 14. Par conséquent un tel dispositif 1 permet de proposer à un équipage des trajectoires d'approche 16, 16', 16" excluant la zone interdite 18 détectée.

Tel que représenté à la figure 8, l'invention concerne également un procédé d'aide au pilotage 30 d'un giravion 2 mis en oeuvre lors d'une phase d'approche d'une zone de poser 14, 14'. Un tel procédé 30 comporte ainsi une pluralité d'étapes s'enchainant successivement les unes après les autres.

En outre, le procédé 30 comporte une étape de présélection 31 permettant à un équipage du giravion 2 de présélectionner un type de zone de poser 4 qu'il souhaite rechercher par la suite.

Le procédé 30 comporte ensuite une étape d'acquisition 32 permettant d'acquérir des images de l'environnement du giravion 2 suivant une ligne de visée 20, 20' d'une (de) caméra(s) 3, 3'.

Une étape de traitement 33 permet dès lors d'identifier au moins une zone de poser recherchée 14, 14' parmi une pluralité d'images issue de la (ou des) caméra(s) 3, 3'. Une étape d'affichage 34 permet alors d'afficher la (ou les) zone(s) de poser recherchée(s) 14, 14'.

Par ailleurs, le procédé 30 comporte une étape de sélection 35 pour sélectionner une zone de poser souhaitée 14 parmi la (ou les) zone(s) de poser recherchée(s) 14, 14'.

Enfin le procédé 30 comporte une étape de commande 36 visant à générer une consigne de commande pour piloter automatiquement le giravion 2 sensiblement horizontalement lors de la phase d'approche en direction de la zone de poser souhaitée 14.

Tel que représenté à la figure 9, le procédé d'aide au pilotage 40 peut également comporter une branche 47 d'étapes supplémentaires, cette branche 47 étant opérée en parallèle des étapes d'affichage 34 et de sélection 35.

Ainsi la branche 47 peut comporter une étape d'affichage 44 permettant d'afficher au moins une image représentative d'un ensemble 15, 15', 15" comportant plusieurs zones de poser recherchées 14, 14'. Dans ce cas, l'étape de traitement 33 des images issues de la (ou des) caméra(s) 3, 3' permet également d'identifier ces ensembles 15, 15', 15".

La branche 47 comporte alors ensuite une étape de sélection 45 permettant à l'équipage du giravion 2 de sélectionner une image représentative de l'ensemble souhaité 15 parmi la (ou les) image(s) représentative(s) d'un ensemble 15, 15', 15" comportant plusieurs zones de poser recherchées 14, 14'.

Enfin, une telle branche 47 comporte une étape de commande 46 permettant de générer lors de la phase d'approche une consigne de commande permettant un pilotage automatique du giravion 2 en direction de cet ensemble souhaité 15.

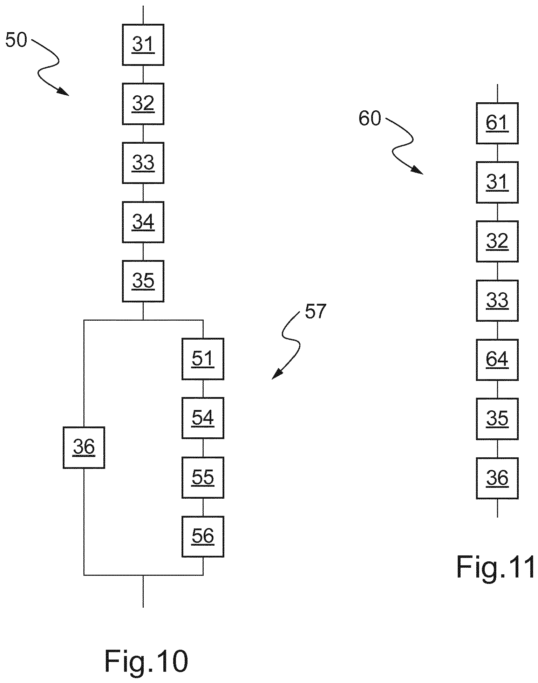

De même tel que représenté à la figure 10, le procédé d'aide au pilotage 50 peut également comporter une branche 57 d'étapes supplémentaires, cette branche 57 étant opérée en parallèle de l'étape de commande 36.

Une telle branche 57 du procédé 50 comporte alors une étape de calcul 51 permettant de déterminer, à partir des images prises par la (ou les) caméra(s) 3, 3', la distance d séparant le giravion 2 du centre géométrique 13 de la zone de pose 14, 14'. Une telle étape de calcul 51 permet alors également de déterminer au moins une trajectoire d'approche 16, 16', 16" du giravion 2 pour s'approcher de la zone de poser souhaitée 14.

Une étape d'affichage 54 permet ensuite d'afficher la (ou les) trajectoire(s) d'approche 16, 16', 16" du giravion 2 en superposition sur l'image de la zone de poser souhaitée 14 puis une étape de sélection 55 permet à l'équipage du giravion 2 de choisir une trajectoire souhaitée 16.

Enfin, une telle branche 57 comporte une étape de commande 56 permettant de générer une consigne de commande pour piloter automatiquement le giravion sensiblement horizontalement vers la zone de poser souhaitée 14 en suivant la trajectoire d'approche souhaitée 16.

Telle que représentée à la figure 11, une autre variante du procédé d'aide au pilotage 60 peut également comporter une étape de stockage 61 dans une mémoire 21 d'informations relatives à la (ou aux) zone(s) de poser recherchée(s) 14, 14'.

Par suite, l'étape d'affichage 64 permet alors un affichage d'une image représentative de la (ou des) zone(s) de poser recherchée(s) 14, 14' avec par exemple en superposition les informations stockées dans la mémoire 21.

Par ailleurs, il est également envisagé de remplacer l'image prise par la (ou les) caméra(s) 3, 3' par une image de la zone de poser recherchée 14, 14' stockée dans cette mémoire 21. Une telle image stockée dans la mémoire 21 peut avoir été prise avec une résolution supérieure à celle issue de la (ou des) caméra(s) 3, 3', ou encore avec un angle de visée particulier ou dans des conditions météorologiques et/ou de luminosité optimales pour leur affichage sur l'organe d'affichage 7 du dispositif d'aide au pilotage 1.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Dispositif d'aide au pilotage (1) d'un giravion (2) pour permettre de piloter un giravion (2) lors d'une phase d'approche précédant une phase d'atterrissage sur une zone de poser (14, 14') pour giravion (2) étant une hélisurface, un héliport, ou un hélipont, ledit dispositif (1) comportant :

   un organe d'affichage (7) permettant d'afficher différentes images représentatives respectivement d'une pluralité de types de zones de poser (4) à rechercher par ledit dispositif (1),
   des moyens de présélection (5) pour présélectionner, des différentes images représentatives respectivement d'une pluralité de types de zones de poser (4),
   un type de zone de poser (4) à rechercher par ledit dispositif (1), lesdits moyens de présélection (5) étant de type tactiles et agencés directement sur une surface d'affichage (10) dudit organe d'affichage (7), lesdits moyens de présélection (5) étant actionnés par un équipage dudit giravion (2), au moins une caméra (3, 3') pour réaliser une pluralité d'images de l'environnement dudit giravion (2) situé en amont dudit giravion (2) suivant une direction postéro-antérieure Dx dudit giravion (2), ladite au moins une caméra (3, 3') étant orientée pour effectuer ladite pluralité d'images de l'environnement dudit giravion (2) suivant une ligne de visée (20, 20'), ladite ligne de visée (20, 20') étant orientée au moins suivant ladite direction postéro-antérieure Dx dudit giravion (2),

des moyens de traitement (6) pour identifier dans au moins une image, parmi ladite pluralité d'images, au moins une zone de poser recherchée (14, 14') correspondant au type de zone de poser présélectionné (4) via lesdits moyens de présélection (5), ledit organe d'affichage (7) étant configuré pour au moins afficher une image représentative de ladite au moins une zone de poser recherchée (14, 14'),

des moyens de sélection (8) par l'équipage dudit giravion (2) pour sélectionner une zone de poser souhaitée (14) parmi ladite au moins une zone de poser recherchée (14, 14'), lesdits moyens de traitement (6) permettent d'identifier dans ladite au moins une image, parmi ladite pluralité d'images, si ladite au moins une zone de poser souhaitée (14) comporte un élément d'occlusion (17) puis d'afficher un message d'information sur ledit organe d'affichage (7) avec ladite image représentative de ladite au moins une zone de poser souhaitée (14) comportant ledit élément d'occlusion (17),

une unité de commande (9) pour générer une consigne de commande permettant de piloter automatiquement ledit giravion (2) horizontalement en direction de ladite zone de poser souhaitée (14).

2.  Dispositif selon la revendication 1,
    **caractérisé en ce que** :

    lesdits moyens de traitement (6) permettent d'identifier dans ladite au moins une image, parmi ladite pluralité d'images, au moins un ensemble (15, 15', 15") comportant plusieurs zones de poser recherchées (14, 14') correspondant au type de zone de poser (4) présélectionné via lesdits moyens de présélection (5),

    ledit organe d'affichage (7) permet d'afficher dans ladite image représentative ledit au moins un ensemble (15, 15', 15") comportant plusieurs zones de poser recherchées (14, 14'),

    lesdits moyens de sélection (8) permettent de sélectionner un ensemble souhaité (15) parmi ledit au moins un ensemble (15, 15', 15") comportant plusieurs zones de poser recherchées (14, 14').

3.  Dispositif selon l'une quelconque des revendications 1 à 2, **caractérisé en ce que** ledit dispositif (1) comporte des moyens de calcul (12) pour déterminer, à partir d'une image de ladite zone de poser souhaitée (14), la distance entre ledit giravion (2) et un centre géométrique (13) de ladite zone de poser souhaitée (14).

4.  Dispositif selon la revendication 3,
    **caractérisé en ce que** :

    lesdits moyens de calcul (12) déterminent au moins une trajectoire d'approche (16, 16', 16") dudit giravion (2) pour s'approcher de ladite zone de poser souhaitée (14),

    ledit organe d'affichage (7) affiche une image représentative de ladite au moins une trajectoire d'approche (16, 16', 16") dudit giravion (2),

    lesdits moyens de sélection (8) permettent de sélectionner une trajectoire d'approche souhaitée (16) parmi ladite au moins une trajectoire d'approche (16, 16', 16") dudit giravion (2),

    ladite unité de commande (9) génère une consigne de commande permettant de piloter automatiquement sensiblement horizontalement ledit giravion (2) en direction de ladite zone de poser souhaitée (14) en suivant ladite trajectoire d'approche souhaitée (16).

5.  Dispositif selon l'une quelconque des revendications 1 à 4, **caractérisé en ce que** lesdits moyens de traitement (6) permettent d'identifier dans ladite au moins une image, parmi ladite pluralité d'images, si un environnement immédiat de ladite au moins une zone de poser souhaitée (14) comporte une zone interdite (18).

6.  Dispositif selon les revendications 4 et 5,
    **caractérisé en ce que** ladite au moins une trajectoire d'approche (16, 16', 16") dudit giravion permet d'éviter ladite zone interdite (18) présente dans ledit environnement immédiat de ladite au moins une zone de poser souhaitée (14).

7.  Dispositif selon l'une quelconque des revendications 1 à 6, **caractérisé en ce que** ladite au moins une caméra (3, 3') comporte une première caméra (3) agencée sur une tourelle mobile (19) pour régler l'orientation d'une première ligne de visée (20) de ladite première caméra (3) suivant un angle de site et/ou un angle de gisement, ladite première caméra (3) possédant un premier champ et permettant d'obtenir une image panoramique de ladite au moins une zone de poser recherchée (14, 14').

8.  Dispositif selon la revendication 7,
    **caractérisé en ce que** ladite au moins une caméra (3, 3') comporte une seconde caméra (3') agencée sur une tourelle mobile (19') pour régler l'orientation d'une seconde ligne de visée (20') de ladite seconde caméra (3') suivant un angle de site et/ou un angle de gisement, ladite seconde caméra (3') possédant un second champ inférieur audit premier champ de ladite première caméra (3) et permettant d'obtenir une image "haute résolution" de ladite au moins une zone de poser recherchée (14, 14').

9. Dispositif selon l'une quelconque des revendications 1 à 7, **caractérisé en ce que** ledit dispositif (1) comporte au moins une mémoire (21) pour stocker des informations relatives à ladite au moins une zone de poser recherchée (14, 14'), ledit organe d'affichage (7) permettant d'afficher lesdites informations simultanément avec et/ou en remplacement de ladite image correspondante représentative de ladite au moins une zone de poser recherchée (14, 14').

10. Giravion (2) **caractérisé en ce qu'**il comporte un dispositif d'aide au pilotage (1) selon l'une quelconque des revendications 1 à 9 pour permettre de piloter ledit giravion (2) lors d'une phase d'approche précédant une phase d'atterrissage sur une zone de poser (14, 14') pour giravion (2) étant une hélisurface, un héliport, ou un hélipont.

11. Procédé d'aide au pilotage (30, 40, 50, 60) d'un giravion (2), ledit procédé (30, 40, 50, 60) étant mis en oeuvre lors d'une phase d'approche précédant une phase d'atterrissage sur une zone de poser (14, 14') pour giravion (2) étant une hélisurface, un héliport, ou un hélipont,
ledit procédé (30, 40, 50, 60) comportant :

une étape de présélection (31) pour présélectionner, de différentes images représentatives respectivement d'une pluralité de types de zones de poser (4),
un type de zone de poser (4) à rechercher par ledit procédé (30, 40, 50, 60), ladite étape de présélection (31) étant effectuée par un équipage dudit giravion (2) en actionnant des moyens de présélection (5) de type tactile,
une étape d'acquisition (32) pour réaliser une pluralité d'images de l'environnement dudit giravion (2) situé en amont dudit giravion (2) suivant une direction postéro-antérieure Dx dudit giravion (2),
une étape de traitement (33) pour identifier dans au moins une image, parmi ladite pluralité d'images, au moins une zone de poser recherchée (14, 14') correspondant au type de zone de poser présélectionné (4) lors de ladite étape de présélection (31),
au moins une étape d'affichage (34, 64) pour au moins afficher une image représentative de ladite au moins une zone de poser recherchée (14, 14'),
au moins une étape de sélection (35) par l'équipage dudit giravion (2) pour au moins sélectionner une zone de poser souhaitée (14) parmi ladite au moins une zone de poser recherchée (14, 14'), ladite étape de traitement (33) permettant d'identifier dans ladite au moins une image, parmi ladite pluralité d'images, si ladite au moins une zone de poser souhaitée (14) comporte un élément d'occlusion (17) puis d'afficher un message d'information avec ladite image représentative de ladite au moins une zone de poser souhaitée (14) comportant ledit élément d'occlusion (17)
au moins une étape de commande (36) pour au moins générer une consigne de commande permettant de piloter automatiquement ledit giravion (2) horizontalement en direction de ladite zone de poser souhaitée (14).

12. Procédé (40) selon la revendication 11,
**caractérisé en ce que** ladite étape de traitement (33) permet d'identifier dans ladite au moins une image, parmi ladite pluralité d'images, au moins un ensemble (15, 15', 15") comportant plusieurs zones de poser recherchées (14, 14') correspondant au type de zone de poser présélectionné (4) lors de ladite étape de présélection (31),et **en ce que** ledit procédé (40) comporte :

une étape supplémentaire d'affichage (44) pour afficher dans ladite image représentative ledit au moins un ensemble (15, 15', 15") comportant plusieurs zones de poser recherchées (14, 14'),
une étape supplémentaire de sélection (45) pour sélectionner un ensemble souhaité (15) parmi ledit au moins un ensemble (15, 15', 15") comportant plusieurs zones de poser recherchées (14, 14')
une étape supplémentaire de commande (46) pour générer une consigne de commande permettant de piloter automatiquement sensiblement horizontalement ledit giravion (2) en direction dudit ensemble souhaité (15).

13. Procédé selon l'une quelconque des revendications 11 à 12,
**caractérisé en ce que** ledit procédé (50) comporte une étape de calcul (51) pour déterminer, à partir d'une image de ladite zone de poser souhaitée (14), la distance d entre ledit giravion (2) et un centre géométrique (13) de ladite zone de poser souhaitée (14).

14. Procédé selon la revendication 13,

**caractérisé en ce que** ladite étape de calcul (51) détermine au moins une trajectoire d'approche (16, 16', 16") dudit giravion (2) pour s'approcher de ladite zone de poser souhaitée (14),
et **en ce que** ledit procédé (50) comporte :

une étape supplémentaire d'affichage (54) pour afficher une image représentative de ladite au moins une trajectoire d'approche (16, 16', 16") dudit giravion (2),
une étape supplémentaire de sélection (55) pour sélectionner une trajectoire d'approche souhaitée (16) parmi ladite au moins une trajectoire d'approche (16, 16', 16") dudit giravion (2),
une étape supplémentaire de commande (56) pour générer une consigne de commande permettant de piloter automatiquement ledit giravion (2) sensiblement horizontalement en direction de ladite zone de poser souhaitée (14) en suivant ladite trajectoire d'approche souhaitée (16).

15. Procédé selon l'une quelconque des revendications 11 à 14,
**caractérisé en ce que** ladite étape de traitement (33) permet d'identifier dans ladite au moins une image, parmi ladite pluralité d'images, si un environnement immédiat de ladite au moins une zone de poser souhaitée (14) comporte une zone interdite (18).

16. Procédé selon les revendications 14 et 15,
**caractérisé en ce que** ladite au moins une trajectoire d'approche (16, 16', 16") dudit giravion (2) permet d'éviter ladite zone interdite (18) présente dans ledit environnement immédiat de ladite au moins une zone de poser souhaitée (14).

17. Procédé selon l'une quelconque des revendications 11 à 16,
**caractérisé en ce que** ledit procédé (60) comporte au moins une étape de stockage (61) pour stocker des informations relatives à ladite au moins une zone de poser recherchée (14, 14'), ladite étape d'affichage (64) permettant d'afficher lesdites informations simultanément avec et/ou en remplacement de ladite image correspondante représentative de ladite au moins une zone de poser recherchée (14, 14').

**Patentansprüche**

1. Hilfsvorrichtung (1) zum Steuern eines Drehflügelflugzeugs (2), um das Steuern eines Drehflügelflugzeugs (2) während einer Anflugphase zu ermöglichen, die einer Landephase auf einer Landezone (14, 14') für das Drehflügelflugzeug (2) vorausgeht, bei der es sich um einen Hubschrauberlandeplatz, einen Heliport oder ein Hubschrauberdeck handelt, wobei die Vorrichtung (1) umfasst:

eine Anzeigevorrichtung (7), die es erlaubt, verschiedene Bilder anzuzeigen, die jeweils repräsentativ für eine Mehrzahl von Arten von Landezonen (4) sind, die von der Vorrichtung (1) gesucht werden sollen,
Vorauswahlmittel (5) zum Vorauswählen, unter den verschiedenen jeweils für eine Mehrzahl von Arten von Landezonen repräsentativen Bildern, eines Typs von Landezone (4), die von der Vorrichtung (1) gesucht werden soll, wobei die Vorauswahlmittel (5) vom taktilen Typ sind und direkt auf einer Anzeigefläche (10) der Anzeigevorrichtung (7) angeordnet sind, wobei die Vorauswahlmittel (5) von einer Besatzung des Drehflügelflugzeugs (2) betätigt werden,
mindestens eine Kamera (3, 3') zum Erstellen einer Mehrzahl von Bildern der Umgebung des Drehflügelflugzeugs (2), die sich in einer Hinten-Vorne-Richtung Dx des Drehflügelflugzeugs (2) vor dem Drehflügelflugzeug (2) befindet, wobei die mindestens eine Kamera (3, 3') ausgerichtet ist, um die Mehrzahl von Bildern der Umgebung des Drehflügelflugzeugs (2) entlang einer Sichtlinie (20, 20') aufzunehmen, wobei die Sichtlinie (20, 20') mindestens entlang der Hinten-Vorne-Richtung Dx des Drehflügelflugzeugs (2) ausgerichtet ist,
Verarbeitungsmittel (6), um in mindestens einem Bild aus der Mehrzahl von Bildern mindestens eine gewünschte Landezone (14, 14') zu identifizieren, die dem über die Vorauswahlmittel (5) vorausgewählten Typ von Landezone (4) entspricht, wobei die Anzeigevorrichtung (7) konfiguriert ist, um mindestens ein Bild anzuzeigen, das für die mindestens eine gewünschte Landezone (14, 14') repräsentativ ist,
Auswahlmittel (8) (2) zum Auswählen, durch die Besatzung des Drehflügelflugzeugs, einer gewünschten Landezone (14) aus der Mehrzahl der mindestens einen gewünschten Landezone (14, 14'), wobei die Verarbeitungsmittel (6) es erlauben, in dem mindestens einen Bild aus der Mehrzahl von Bildern zu identifizieren, ob die mindestens eine gewünschte Landezone (14) ein Okklusionselement (17) aufweist, und dann mit dem für die mindestens eine gewünschte Landezone (14) mit dem Okklusionselement (17) repräsentativen Bild eine Informationsmeldung auf der Anzeigevorrichtung (7) anzuzeigen,

eine Steuereinheit (9) zum Erzeugen eines Steuerbefehls, um das Drehflügelflugzeug (2) automatisch horizontal in Richtung der gewünschten Landezone (14) zu steuern.

2. Vorrichtung nach Anspruch 1, **dadurch gekennzeichnet, dass**:

die Verarbeitungsmittel (6) es erlauben, in dem mindestens einen Bild aus der Mehrzahl von Bildern mindestens einen Satz (15, 15', 15") mit mehreren gewünschten Landezonen (14, 14') zu identifizieren, die dem über die Vorauswahlmittel (5) vorausgewählten Typ von Landezone (4) entsprechen,
die Anzeigevorrichtung (7) es erlaubt, in dem repräsentativen Bild den mindestens einen Satz (15, 15', 15") mit mehreren gewünschten Landezonen (14, 14') anzuzeigen,
die Auswahleinrichtung (8) es erlaubt, einen gewünschten Satz (15) aus dem mindestens einen Satz (15, 15', 15") auszuwählen, der mehrere gewünschte Landezonen (14, 14') umfasst.

3. Vorrichtung nach einem der Ansprüche 1 bis 2,
**dadurch gekennzeichnet, dass** die Vorrichtung (1) Rechenmittel (12) umfasst, um aus einem Bild der gewünschten Landezone (14) den Abstand zwischen dem Drehflügelflugzeug (2) und einem geometrischen Zentrum (13) der gewünschten Landezone (14) zu bestimmen.

4. Vorrichtung nach Anspruch 3, **dadurch gekennzeichnet, dass**:

die Rechenmittel (12) mindestens eine Anflugbahn (16, 16', 16") des Drehflügelflugzeugs (2) bestimmen, um sich der gewünschten Landezone (14) anzunähern,
die Anzeigevorrichtung (7) ein Bild anzeigt, das für die mindestens eine Anflugbahn (16, 16', 16") des Drehflügelflugzeugs (2) repräsentativ ist,
die Auswahlmittel (8) die Auswahl einer gewünschten Anflugbahn (16) aus der mindestens einen Anflugbahn (16, 16', 16") des Drehflügelflugzeugs (2) erlauben,
die Steuereinheit (9) einen Steuerbefehl erzeugt, der es erlaubt, das Drehflügelflugzeug (2) durch Verfolgen der gewünschten Anflugbahn (16) automatisch im Wesentlichen horizontal in Richtung der gewünschten Landezone (14) zu steuern.

5. Vorrichtung nach einem der Ansprüche 1 bis 4,
**dadurch gekennzeichnet, dass** die Verarbeitungsmittel (6) es erlauben, in dem mindestens einen Bild aus der Mehrzahl von Bildern zu identifizieren, ob eine unmittelbare Umgebung der mindestens einen gewünschten Landezone (14) eine verbotene Zone (18) aufweist.

6. Vorrichtung nach den Ansprüchen 4 und 5,
**dadurch gekennzeichnet, dass** die mindestens eine Anflugbahn (16, 16', 16") des Drehflügelflugzeugs es erlaubt, die in der unmittelbaren Umgebung der mindestens einen gewünschten Landezone (14) vorhandene verbotene Zone (18) zu vermeiden.

7. Vorrichtung nach einem der Ansprüche 1 bis 6,
**dadurch gekennzeichnet, dass** die mindestens eine Kamera (3, 3') eine erste Kamera (3) umfasst, die auf einem beweglichen Turm (19) angeordnet ist, um die Ausrichtung einer ersten Sichtlinie (20) der ersten Kamera (3) nach einem Höhenwinkel und/oder einem Seitenwinkel einzustellen, wobei die erste Kamera (3) ein erstes Feld besitzt und es erlaubt, ein Panoramabild der mindestens einen gewünschten Landezone (14, 14') zu erhalten.

8. Vorrichtung nach Anspruch 7,
**dadurch gekennzeichnet, dass** die mindestens eine Kamera (3, 3') eine zweite Kamera (3') umfasst, die auf einem beweglichen Turm (19') angeordnet ist, um die Ausrichtung einer zweiten Sichtlinie (20') der zweiten Kamera (3') in einem Höhenwinkel und/oder einem Seitenwinkel einzustellen, wobei die zweite Kamera (3') ein zweites Feld besitzt, das kleiner als das erste Feld der ersten Kamera (3) ist, und es erlaubt, ein "hochauflösendes" Bild der mindestens einen gewünschten Landezone (14, 14') zu erhalten.

9. Vorrichtung nach einem der Ansprüche 1 bis 7,
**dadurch gekennzeichnet, dass** die Vorrichtung (1) mindestens einen Speicher (21) zum Speichern von Informationen bezüglich der mindestens einen gewünschten Landezone (14, 14') umfasst, wobei die Anzeigevorrichtung (7) es erlaubt, die Informationen gleichzeitig mit und/oder anstelle des entsprechenden, für die mindestens eine gewünschte Landezone (14, 14') repräsentativen Bildes anzuzeigen.

10. Drehflügelflugzeug (2), **dadurch gekennzeichnet, dass** es eine Hilfsvorrichtung (1) für die Steuerung nach einem der Ansprüche 1 bis 9 umfasst, um das Steuern des Drehflügelflugzeugs (2) während einer Anflugphase zu ermöglichen, die einer Landephase auf einer Landezone (14, 14') für das Drehflügelflugzeug (2) vorausgeht, die ein Hubschrauberlandeplatz, ein Heliport oder ein Hubschrauberdeck ist.

11. Hilfsverfahren (30, 40, 50, 60) zum Steuern eines Drehflügelflugzeugs (2), wobei das Verfahren (30, 40, 50, 60) während einer Anflugphase eingesetzt wird, die einer Landephase auf einer Landezone (14, 14') für Drehflügelflugzeuge (2) vorausgeht, die ein Hubschrauberlandeplatz, ein Heliport oder ein Hubschrauberdeck ist, wobei das Verfahren (30, 40, 50, 60) umfasst:

einen Vorauswahlschritt (31) zum Vorauswählen eines Typs von Landezone (4), der durch das Verfahren (30, 40, 50, 60) gesucht werden soll, aus verschiedenen für jeweils eine Mehrzahl von Typen von Landezonen (4) repräsentativen Bildern, wobei der Vorauswahlschritt (31) von einer Besatzung des Drehflügelflugzeugs (2) durch Betätigen von Vorauswahlmitteln (5) vom taktilen Typ durchgeführt wird,
einen Erfassungsschritt (32) zum Erstellen einer Mehrzahl von Bildern der Umgebung des Drehflügelflugzeugs (2), die in einer Hinten-Vorne-Richtung Dx des Drehflügelflugzeugs (2) vor dem Drehflügelflugzeug (2) liegt,
einen Verarbeitungsschritt (33) zum Identifizieren mindestens einer gewünschten Landezone (14, 14'), die dem während des Vorauswahlschritts (31) vorausgewählten (4) Typ von Landezone entspricht, in mindestens einem Bild aus der Mehrzahl von Bildern,
mindestens einen Anzeigeschritt (34, 64) wenigstens zum Anzeigen eines für die mindestens eine gewünschte Landezone (14, 14') repräsentativen Bildes,
mindestens einen Auswahlschritt (35) mindestens zum Auswählen einer gewünschten Landezone (14) aus der mindestens einen gewünschten Landezone (14, 14') durch die Besatzung des Drehflügelflugzeugs (2),
wobei der Verarbeitungsschritt (33) es erlaubt, in dem mindestens einen Bild aus der Mehrzahl von Bildern zu identifizieren, ob die mindestens eine gewünschte Landezone (14) ein Okklusionselement (17) aufweist, und dann eine Informationsmeldung mit dem für die mindestens eine gewünschte Landezone (14) mit dem Okklusionselement (17) repräsentativen Bild anzuzeigen,
mindestens einen Steuerschritt (36) zum Erzeugen mindestens eines Steuerbefehls, der es erlaubt, das Drehflügelflugzeug (2) automatisch horizontal in Richtung der gewünschten Landezone (14) zu steuern.

12. Verfahren (40) nach Anspruch 11,
**dadurch gekennzeichnet, dass** der Verarbeitungsschritt (33) es erlaubt, in dem mindestens einen Bild aus der Mehrzahl von Bildern mindestens einen Satz (15, 15', 15") mit mehreren gewünschten Landezonen (14, 14') zu identifizieren, die dem in dem Vorauswahlschritt (31) vorausgewählten Typ von Landezone (4) entsprechen, und dass das Verfahren (40) umfasst:

einen zusätzlichen Anzeigeschritt (44) zum Anzeigen des mindestens einen Satzes (15, 15', 15") von mehreren gewünschten Landezonen (14, 14') in dem repräsentativen Bild,
einen zusätzlichen Auswahlschritt (45) zum Auswählen eines gewünschten Satzes (15) aus dem mindestens einen Satz (15, 15', 15") mit mehreren gewünschten Landezonen (14, 14'),
einen zusätzlichen Steuerschritt (46) zum Erzeugen eines Steuerbefehls, der es erlaubt, das Drehflügelflugzeug (2) automatisch im Wesentlichen horizontal in Richtung des gewünschten Satzes (15) zu steuern.

13. Verfahren nach einem der Ansprüche 11 bis 12,
**dadurch gekennzeichnet, dass** das Verfahren (50) einen Berechnungsschritt (51) zum Bestimmen des Abstands d zwischen dem Drehflügelflugzeug (2) und einem geometrischen Zentrum (13) der gewünschten Landezone (14) aus einem Bild der gewünschten Landezone (14) umfasst.

14. Verfahren nach Anspruch 13,

**dadurch gekennzeichnet, dass** der Berechnungsschritt (51) mindestens eine Anflugbahn (16, 16', 16") des Drehflügelflugzeugs (2) zum Annähern an die gewünschte Landezone (14) bestimmt, und dass das Verfahren (50) umfasst:

einen zusätzlichen Anzeigeschritt (54) zum Anzeigen eines für die mindestens eine Anflugbahn (16, 16', 16") des Drehflügelflugzeugs (2) repräsentativen Bildes,
einen zusätzlichen Auswahlschritt (55) zum Auswählen einer gewünschten Anflugbahn (16) aus der mindestens einen Anflugbahn (16, 16', 16") des Drehflügelflugzeugs (2),

einen zusätzlichen Steuerschritt (56) zum Erzeugen eines Steuerbefehls zum automatischen Steuern des Drehflügelflugzeugs (2) im Wesentlichen horizontal in Richtung der gewünschten Landezone (14) entlang der gewünschten Anflugbahn (16).

15. Verfahren nach einem der Ansprüche 11 bis 14,
**dadurch gekennzeichnet, dass** der Verarbeitungsschritt (33) in dem mindestens einen Bild aus der Mehrzahl von Bildern identifiziert, ob eine unmittelbare Umgebung der mindestens einen gewünschten Landezone (14) eine verbotene Zone (18) aufweist.

16. Verfahren nach den Ansprüchen 14 und 15,
**dadurch gekennzeichnet, dass** die mindestens eine Anflugbahn (16, 16', 16") des Drehflügelflugzeugs (2) es erlaubt, die in der unmittelbaren Umgebung der mindestens einen gewünschten Landezone (14) vorhandene verbotene Zone (18) zu vermeiden.

17. Verfahren nach einem der Ansprüche 11 bis 16,
**dadurch gekennzeichnet, dass** das Verfahren (60) mindestens einen Speicherschritt (61) zum Speichern von Informationen bezüglich der mindestens einen gewünschten Landezone (14, 14') umfasst, wobei der Anzeigeschritt (64) es erlaubt, die Informationen gleichzeitig mit und/oder als Ersatz für das entsprechende, die mindestens eine gewünschte Landezone (14, 14') darstellende Bild anzuzeigen.

**Claims**

1.  A device (1) for assisting the piloting of a rotorcraft (2) in order to enable a rotorcraft (2) to be piloted during an approach stage preceding a stage of landing on a landing area (14, 14') intended for a rotorcraft (2), said landing area being a helipad, heliport or helideck, said device (1) comprising: a display member (7) for displaying various images respectively representative of a plurality of types of landing area (4) to be looked for by said device (1),

    preselection means (5) for preselecting, from the various images respectively representative of a plurality of types of landing area (4), a type of landing area (4) to be looked for by said device (1), said preselection means (5) being of the touch type and arranged directly on a display surface (10) of said display member (7), said preselection means (5) being actuated by a crew of said rotorcraft (2); at least one camera (3, 3') for producing a plurality of images of the environment of said rotorcraft (2) situated forward of said rotorcraft (2) in a posterior-anterior direction Dx of said rotorcraft (2), said at least one camera (3, 3') being oriented to produce said plurality of images of the environment of said rotorcraft (2) along a line of sight (20, 20'), said line of sight (20, 20') being oriented at least along said posterior-anterior direction Dx of said rotorcraft (2); processing means (6) for identifying in at least one image, from among said plurality of images, at least one looked-for landing area (14, 14') corresponding to the type of landing area (4) preselected via the preselection means (5), said display member (7) being configured to display at least one image representative of said at least one looked-for landing area (14, 14'),
    selection means (8) enabling the crew of said rotorcraft (2) to select a desired landing area (14) from among said at least one looked-for landing area (14, 14'), said processing means (6) making it possible to identify in said at least one image, from among said plurality of images, whether said at least one desired landing area (14) includes an occluding element (17) and then to display an information message on said display member (7) with said image representative of said at least one desired landing area (14) including said occluding element (17),
    a control unit (9) for generating a control setpoint enabling said rotorcraft (2) to be automatically piloted horizontally towards said desired landing area (14).

2.  Device according to claim 1,
    **characterised in that**:

    said processing means (6) make it possible to identify in said at least one image, from among said plurality of images, at least one set (15, 15', 15") comprising several looked-for landing areas (14, 14') corresponding to the type of landing area (4) preselected via said preselection means (5),
    said display member (7) makes it possible to display in said representative image said at least one set (15, 15', 15") comprising several looked-for landing areas (14, 14'),
    said selection means (8) make it possible to select a desired set (15) from among said at least one set (15, 15', 15") comprising several desired landing areas (14, 14').

3.  Device according to any one of claims 1 to 2,
    **characterised in that** said device (1) comprises calculation means (12) for determining from an image of said desired landing area (14) the distance between said rotorcraft (2) and a geometrical centre (13) of said desired landing area (14).

4.  Device according to claim 3,
    **characterised in that**:

    said calculation means (12) determine at least one approach path (16, 16', 16") for said rotorcraft (2) in order to approach said desired landing area (14),
    said display member (7) displays an image representative of said at least one approach path (16, 16', 16") of said rotorcraft (2),
    said selection means (8) make it possible to select a desired approach path (16) from among said at least one approach path (16, 16', 16") of said rotorcraft (2),
    said control unit (9) generates a control setpoint enabling said rotorcraft (2) to be piloted automatically substantially horizontally towards said desired landing area (14) following said desired approach path (16).

5.  Device according to any one of claims 1 to 4,
    **characterised in that** said processing means (6) make it possible to identify in said at least one image from among said plurality of images whether an immediate environment of said at least one desired landing area (14) includes a prohibited area (18).

6.  Device according to claims 4 and 5,
    **characterised in that** said at least one approach path (16, 16', 16") of said rotorcraft makes it possible to avoid said prohibited area (18) present in said immediate environment of said at least one desired landing area (14).

7.  Device according to one of claims 1 to 6, **characterised in that** said at least one camera (3, 3') comprises a first camera (3) arranged in a movable turret (19) to adjust the orientation of a first line of sight (20) of said first camera (3) along an elevation angle and/or an azimuth angle, said first camera (3) possessing a first field of view and serving to obtain a panoramic image of said at least one looked-for landing area (14, 14').

8.  Device according to claim 7,
    **characterised in that** said at least one camera (3, 3') comprises a second camera (3') arranged in a movable turret (19') to adjust the orientation of a second line of sight (20') of said second camera (3') along an elevation angle and/or an azimuth angle, said second camera (3') possessing a second field of view smaller than said first field of view of said first camera (3) and serving to obtain a "high-resolution" image of said at least one looked-for landing area (14, 14').

9.  Device according to any one of claims 1 to 7,
    **characterised in that** said device (1) comprises at least one memory (21) for storing information relating to said at least one desired landing area (14, 14'), said display member (7) enabling said information to be displayed simultaneously with and/or as a replacement for said corresponding image representative of said at least one desired landing area (14, 14').

10. Rotorcraft (2) **characterised in that** it comprises a piloting assistance device (1) according to any one of claims 1 to 9 in order to enable said rotorcraft (2) to be piloted during an approach stage preceding a stage of landing on a landing area (14, 14') intended for a rotorcraft (2), said landing area being a helipad, heliport or helideck.

11. A method (30, 40, 50, 60) for assisting the piloting of a rotorcraft (2), said method (30, 40, 50, 60) being implemented during an approach stage preceding a stage of landing on a landing area (14, 14') intended for a rotorcraft, said landing area (2) being a heliport, a helipad or a helideck, said method (30, 40, 50, 60) comprising:

    a preselection step (31) for preselecting, from various images respectively representative of a plurality of types of landing area (4), a type of landing area to (4) to be looked for by said method (30, 40, 50, 60), said preselection step (31) being carried out by a crew of said rotorcraft (2) by actuating preselection means (5) of the touch type,
    an acquisition step (32) for obtaining a plurality of images of the environment of said rotorcraft (2) situated forward of said rotorcraft (2) in a posterior-anterior direction Dx of said rotorcraft (2),
a processing step (33) for identifying in said at least one image, from among said plurality of images, at least one looked-for landing area (14, 14') corresponding to the type of landing area (4) preselected via said preselection step (31),
at least one display step (34, 64) for displaying at least one image representative of said at least one desired landing area (14, 14'),
at least one selection step (35) carried out by the crew of said rotorcraft (2) to select a desired landing area (14) from among said at least one looked-for landing area (14, 14'), said processing step (33) making it possible to identify in said at least one image, from among said plurality of images, whether said at least one desired landing area (14) includes an occluding element (17) and then to display an information message with said image representative of said at least one desired landing area (14) including said occluding element (17),
at least one control step (36) for generating at least one control setpoint enabling said rotorcraft (2) to be automatically piloted horizontally towards said desired landing area (14).

12. Method according to claim 11,
**characterised in that** said processing step (33) makes it possible to identify in said at least one image, from among said plurality of images, at least one set (15, 15', 15") comprising several looked-for landing areas (14, 14') corresponding to the type of landing area (4) preselected via said preselection step (31), and **in that** said method (40) comprises:

an additional display step (44) for displaying in said representative image said at least one set (15, 15', 15") comprising several looked-for landing areas (14, 14'),
an additional selection step (45) for selecting a desired set (15) from among said at least one set (15, 15', 15") comprising several desired landing areas (14, 14'),
an additional control step (46) for generating a control setpoint enabling said rotorcraft (2) to be automatically piloted substantially horizontally towards said desired set (15).

13. Method according to any one of claims 11 to 12,
**characterised in that** said method (50) comprises a calculation step (51) for determining, from an image of said desired landing area (14), the distance d between said rotorcraft (2) and a geometrical centre (13) of said desired landing area (14).

14. Method according to claim 13,

**characterised in that** said calculation step (51) determines at least one approach path (16, 16', 16") for said rotorcraft (2) in order to approach said desired landing area (14),
and **in that** said method (50) comprises:

an additional display step (54) for displaying an image representative of said at least one approach path (16, 16', 16") of said rotorcraft (2),
an additional selection step (55) for selecting a desired approach path (16) from among said at least one approach path (16, 16', 16") of said rotorcraft (2),
an additional control step (56) for generating a control setpoint enabling said rotorcraft (2) to be piloted automatically substantially horizontally towards said desired landing area (14) following said desired approach path (16).

15. Method according to any one of claims 11 to 14,
**characterised in that** said processing step (33) makes it possible to identify in said at least one image, from among said plurality of images, whether an immediate environment of said at least one desired landing area (14) includes a prohibited area (18).

16. Method according to claims 14 and 15,
**characterised in that** said at least one approach path (16, 16', 16") of said rotorcraft makes it possible to avoid said prohibited area (18) present in said immediate environment of said at least one desired landing area (14).

17. Method according to any one of claims 11 to 16,
**characterised in that** said method (60) comprises at least one storage step (61) for storing information relating to said at least one desired landing area (14, 14'), said display step (64) enabling said information to be displayed simultaneously with and/or as a replacement for said corresponding image representative of said at least one desired landing area (14, 14').

Fig.1

Fig.2

Fig.3

Fig.4

Fig.5

Fig.6

Fig.7

Fig.8

Fig.9

50

31

32

33

34

35

57

51

36

54

55

56

Fig.10

60

61

31

32

33

64

35

36

Fig.11

## RÉFÉRENCES CITÉES DANS LA DESCRIPTION

**Documents brevets cités dans la description**

- EP 2996009 A
- WO 2014169354 A
- EP 2977976 A2
- US 9257048 B1
- US 2016055754 A1
- US 4618989 A

**Littérature non-brevet citée dans la description**

- **D'ARNAUD LE TROTER ; SÉBASTIEN MAVROMATIS ; JEAN SEQUEIRA.** Soccer field détection in video images using color and spatial cohérence. *International Conférence on Image Analysis and Récognition Porto, Portugal,* Octobre 2004